# EUROPEAN PATENT SPECIFICATION

(11) **EP 3 375 724 B1**
(45) Date of publication and mention of the grant of the patent: **20.03.2019**
(21) Application number: 18161542.8
(22) Date of filing: 13.03.2018
(51) Int. Cl.: B65D 8/00, B65D 6/34, B65D 1/46, B65D 43/16, B29C 69/00, B29C 51/00

(54) **FOOD PACKAGE AND ITS METHOD OF MANUFACTURE**
LEBENSMITTELVERPACKUNG UND VERFAHREN ZUR DEREN HERSTELLUNG
EMBALLAGE ALIMENTAIRE ET SON PROCÉDÉ DE FABRICATION

(30) Priority: 13.03.2017 NL 2018507
(43) Date of publication of application: 19.09.2018
(73) Proprietor: Conveni B.V., 5757 PZ Liessel (NL)
(72) Inventor: Gijsbers, Henricus Johannes, 5758 RZ Neerkant (NL); Verhaert, Giovanni Hendrik, 5032 TP Tilburg (NL)
(74) Representative: Nollen, Maarten Dirk-Johan

(56) References cited:
- WO-A1-2013/083834
- DE-A1- 4 334 876
- DE-A1- 19 744 955
- ES-A1- 2 283 167
- GB-A- 2 228 253
- GB-A- 2 384 473
- JP-A- H0 516 957
- US-A- 5 603 203
- US-A1- 2007 092 611
- US-A1- 2007 138 192
- US-A1- 2009 291 174
- US-A1- 2012 036 815

## Description

### FIELD OF THE INVENTION

The invention relates to a method for manufacturing a food packaging with a container.

The invention further relates to a food packaging provided with a container and a covering, wherein the container comprises a bottom and at least a side wall, which side wall is provided with an upper edge.

The invention also relates to the use of the food packaging for packaging foodstuff.

### BACKGROUND OF THE INVENTION

Meals which are ready for consumption after being heated in a microwave are increasingly sold in supermarkets and at other locations. Such meals are packaged in a food packaging which generally contains a quantity of food which is sufficient for one person. These food packagings filled with meals are obtained by first preparing the meal and then filling the packaging, which is then hermetically sealed in order to ensure the longest possible shelf life of the meal. This is done with a sealing film. A gas flushing is generally administered before sealing in order to extend the shelf life. The hermetic sealing is followed by cooling to a temperature at which the meal can be stored. This temperature generally lies between 0 and 10 degrees Celsius. Such applications are also known as hot-fill. Lines for filling packagings are for instance known from US2003/113414A1.

The usual food packagings for this application comprise a container of cardboard. Cardboard has sufficient intrinsic strength, which is desired for the manageability by a consumer. It is after all undesirable for a meal to tear and leak in a bag. Cardboard however also has drawbacks - it is particularly difficult to have the sealing film adhere properly to the cardboard.

In addition, there are also packagings formed wholly from plastic. Such packagings consist for instance of a container, a separate lid and a covering film which is attached to the container. These packagings are for instance used for packaging nuts. These packagings usually cannot withstand the high temperatures of for instance 60 degrees. In addition, the packagings for meals also have to withstand a cooling within a short period, without too much deformation of the packaging. Firstly, too much deformation is undesirable from a visual viewpoint. Secondly, it may impede the stackability of the packaging. Thirdly, a high degree of deformation increases the risk of crack formation.

There are further packagings for hot-filling wherein a container is formed by thermoforming a polymer material such as polyethylene terephthalate. An example of such packagings is known from US4,388,356. The packaging comprises however only a container. More materials and combinations of polymer layers suitable for thermoforming have become commercially available since the publication of said patent. A more recent example of a packaging for hot-filling and even for sterilization and pasteurization of food is known from US2009/0291174. The walls of this packaging comprise a plurality of layers, including an oxygen barrier. The packaging is designed such that it is resistant to high pressure, and comprises for this purpose fold regions which allow for controlled expansion and contraction.
US2012/036815A1 discloses a method for producing reclosable packages and to a deep-drawing packaging machine with an embossing station for embossing recesses into a top foil. Herein package trays are formed with locking elements on sides of the package trays in a bottom foil for accommodating products therein. Products are then inserted into the formed package trays. Lids are formed in a top foil in such a way that flat surfaces are formed on sides of the lids, the flat surfaces of the lids covering the locking elements of the package trays when the package trays and the lids have been combined. After that the package trays are closed with the top foil or lids, recesses are embossed into the top foil, which match with the locking elements.
ES2283167A1 discloses a packaging comprising a container defining one or more compartments and provided with flanges. The packaging further comprises a transparent film welded to the flanges of the container, which film forms a hermetic seal to the air with respect to the gas-filled compartment or compartments.

It is nevertheless desirable to provide yet another packaging, as well as a method for manufacture thereof. The object hereof is to create a packaging which is sufficiently strong, can be manufactured at an acceptable price and allows a lid to be integrated in the packaging.

### SUMMARY OF THE INVENTION

It is thus a first object of the invention to provide a method for manufacturing a food packaging which comprises both a container and a covering and which is suitable for so-called hot-fill applications and for use in retail.
It is a second object to provide a resulting food packaging.
It is a further object to provide a use of a food packaging in a hot fill application for the retail market.

According to a first aspect, the invention provides a method for manufacturing a food packaging with a container, which method comprises the steps of:
- Deforming a first film, thus forming a bottom, at least one side wall, and a flange protruding outward on an upper edge of the side wall;
- Providing a second film comprising a first zone and provided with a recess;
- Placing the second film on the first film or vice versa in a manner such that the first zone of the second film overlaps with the flange in a contact area;
- Connecting the first film and the second film by means of thermoforming, wherein the contact area and an overlapping part of the flange are fused into an edge piece, wherein the edge piece is provided on an upper side with a welding surface to which a sealing film can be attached.

According to a second aspect, the invention provides a food packaging provided with a container and a covering, wherein the container comprises a bottom and at least a side wall, which side wall is provided with an upper edge, wherein an annular edge piece is present on the upper edge of the side wall, which edge piece is provided on an upper side with a welding surface to which a sealing film can be attached. The covering comprises a first part which is connected to the container and extends from the annular edge piece, wherein the first part is rotatable between an open state of the container and a covered state by rotation. This rotation is achieved by folding over the first part relative to the edge piece. It is arranged such, that the first part of the covering is placed over the sealing film in the covered state. According to the invention, the edge piece has a greater thickness than the first part extending from the edge piece and is formed by locally fusing together the two films by means of thermoforming.
According to a third aspect, the invention provides a method for making a packaged food product, comprising the steps of:
- Providing a food packaging according to the invention;
- Preparing foodstuff;
- Filling the container with the prepared foodstuff at an increased temperature;
- Preferably adding a gas flushing;
- Hermetically sealing the food packaging by arranging a covering film;
- Covering the food packaging by carrying at least the first part of the covering from the open state into the covered state, and
- Cooling the filled packaging.

The invention is based on the insight that an improved food packaging is obtained by connecting a first film and a second film to each other. The second film comprises a covering in a number of zones, at least one, preferably at least two, and possibly four. The zones are preferably situated around a recess. When the first film is placed on the second film or vice versa, the zones overlap with the flange of the first film, particularly on an outer edge of the recess in contact areas. The parts of the zones extending further in lateral direction are then foldable along a fold line. The fold line is obtained in particular by means of local deformation of the second film during the thermoforming.

The parts of the zones to be folded over are in particular flaps. The advantage of the flaps is that space is left for the consumer and/or seller to see into the unopened food packaging without opening the packaging. In the covered state the parts to be folded over moreover have the advantage that the UV radiation is stopped. The covering in the food packaging is thus not a full covering, but a covering arranged on an upper side. A hermetic sealing of the food packaging is obtained with the sealing film. It is noted that said parts to be folded over are preferably coloured and are not transparent.

The first part is preferably designed such that it is not attached with its free outer end to the container. Instead, it is favourable for the covering to comprise a second part which is connected to the edge piece on an opposite side relative to first part. The first part and the second part can preferably be attached to each other here. For such an attachment it is favourable if there is an attaching means. Such an attaching means can be both mechanical and chemical. A mechanical means is preferred. The first and the second part are preferably each provided with a finger-like part, whereby they can be hooked into each other. Such an implementation works well when the first and the second part - the flaps - are directed upward in the covered state. If desired, there can further be a third and optionally a fourth part, each on opposite sides of the container, which are designed so that after being folded over, in the covered state, they lie flat on the sealing film.

The first film and the second film are in particular attached in a manner such that a strengthened edge piece is created at the location of the mutual connection. The two films are fused locally by the process of thermoforming. A suitable choice of mould ensures that the fused material takes on the form of a thickened portion. This thickened portion is found to be favourable for strengthening of the packaging as a whole.

It is noted that the flange is preferably fused as a whole with the second film at the location of the contact areas. In a first embodiment the flange is annular, i.e. it is substantially uninterrupted along the upper edge of the side wall. In a second embodiment the flange comprises several flange parts. This second embodiment is preferred when the edge piece of the container is provided with corners, preferably rounded corners.

It is noted that the first part and the optional second and further parts extending from the edge piece are not connected to the edge piece by assembly (optionally with adhesive), but form a monolithic whole, such that the first part is not releasable from the edge piece. This is done in particular by thermal welding of films, also known as laser welding. The films are here fused locally so that the chain-like molecules of the films move relative to each other and become entangled.

It is further noted that in the context of the application the term covering does not refer to a seal or a hermetic sealing of an opening, but to a placement over the opening. The container and a free outer end of the first part and optional further parts remain mechanically and chemically separate from each other and are free of a mutual connection between container and said first part and optional further parts. The covering is preferably not full, in the sense that the opening - and the covering film, when attached - remains partially visible in the covered state.

It is noted that the two films in particular each comprise a polymer material. It is not precluded for the polymer material to be provided with an inorganic filler. The polymer material can further comprise additives such as plasticizers and one or more colorants. The polymer materials are in particular thermoplastic, for instance a polyolefin such as HDPE or PP or a condensation polymer such as PET. It is not necessary for the two films to comprise the same polymer material.

In a further embodiment the container has a round or oval bottom. It has been found that such a shape enhances the thermal resistance. If desired, it is further possible to arrange folding areas in order to counterbalance expansion and contraction of the food packaging in controlled manner.

The container preferably has a smaller diameter at the bottom than at the upper edge. More specifically, the container thus has substantially the shape of a truncated cone. Such a shape contributes to the placing stability of the packaging. Such a shape is moreover favourable for use in a filling line, since less precise placing of the packaging relative to a filling device still does not result in errors being made. At the same time, it is favourable for the edge piece to be provided with straight pieces, for instance at least two, and more preferably four, which are placed opposite each other. Although this is deemed advantageous, it is not necessary. Folding over of the first and optionally second and further part preferably takes place along a connecting edge (particularly a folding seam thereof) which protrudes laterally from the edge piece as a flange. When the edge piece is bent but (the folding seam of) the connecting edge is straight, the first part can be folded over relative to the edge piece in simple manner.

It is noted that in the case that the container is provided on the upper side with optionally rounded corners and two pairs of opposite sides, the diameter at the top edge is defined as the perpendicular distance between two opposite sides of a pair. In the case that the two pairs of sides enclose substantially a rectangle, the diameter is defined as the longer distance (the length rather than the width).

In a further embodiment the diameter of the recess in the second film substantially corresponds to a diameter of the container at its upper edge. More particularly, the shape of the recess and the shape of the opening in the container, at the position of the upper edge, substantially correspond. This has the advantage that the container is optimally accessible for filling of the packaging with food, but also for consuming of the food.

It is generally favourable for the films to be obtained from a roll. The first film is then deformed, thus forming the container. The second film is optionally also shaped into a pattern. The two films are then fused together. It is not precluded for the films to be fused together in a situation wherein at least one of the films has not yet been separated into separate units. The second film can for instance be situated on a carrier or belt on which the containers are placed. After this, the second film can then be divided and material which may be present around the flaps can be removed.

In another embodiment the deforming of the first film, thus forming the container, takes place after the first and the second film have been placed on each other. The second film is then provided beforehand with recesses. The die of the mould will then engage on the first film through the recess. This embodiment has the advantage that only one step is required, wherein the films are thermally deformed. In this embodiment it is deemed advantageous for the one or more zones also to be defined in the second film prior to placing on the first film.

The packaging has been found to be highly suitable for packaging meals. The packaging is provided here with a source of carbohydrates such as rice or pasta, vegetables and optionally meat. The whole is here brought to an increased temperature, such as at least 60°C, preferably at least 70°C. A gas flushing is applied during the filling. This is preferably a gas mixture with a lower concentration of oxygen than air. The gas mixture can also contain only nitrogen. A covering film is then arranged, and the packaged meal is cooled to a storage temperature, for instance a maximum of 10°C, and more preferably a maximum of 5°C. Although freezing of the meal is not precluded, this is not a primary application. It has been found that a meal which has been prepared and packaged in this way has a very long shelf life, without preservatives having to be added. The shelf life is preferably at least 10 days, more preferably at least 14 days or even at least 20 days. Tests have found a shelf life of 28 days. This shelf life is tested according to standard procedures at a constant storage temperature. It is an advantage here that the food packaging with the meal therein is suitable for heating in a microwave.

### BRIEF DESCRIPTION OF THE FIGURES

These and other aspects of the method and the packaging according to the invention will be further elucidated with reference to schematic figures, in which:
Fig. 1A shows a first embodiment of the packaging in an open state, with outward directed parts;
Fig. 1B shows a second embodiment of the packaging in a covered state, wherein the flat parts are folded over;
Fig. 2A shows a first film for use in the method, in a stage after being deformed and after being individualized;
Fig. 2B shows a second film for use in the method, in a stage after being cut into the desired form.

### DETAILED DESCRIPTION OF ILLUSTRATED EXEMPLARY EMBODIMENTS

The figures are schematic. The same or similar components in different figures are designated with the same reference numeral.

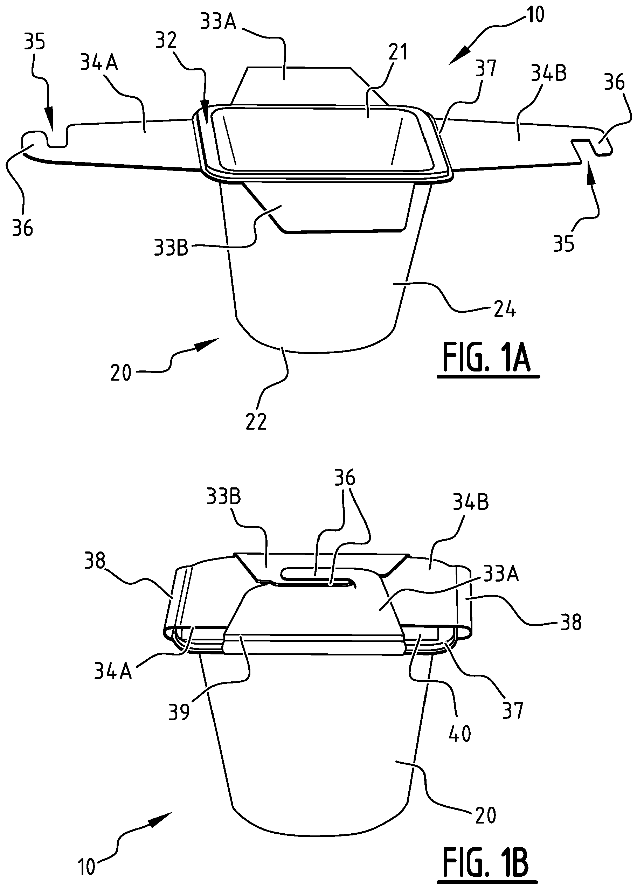

Fig. 1A shows a first embodiment of the packaging 10 according to the invention. Fig. 1B shows a second embodiment of the packaging 10 which largely corresponds with the first embodiment.

Packaging 10 comprises a container 20 provided with a bottom 22 and side walls 24 enclosing a cavity 21. In the shown embodiment bottom 22 has an almost round shape. Situated on an upper edge of side walls 24 is an annular edge piece 32. In the shown embodiment the shape thereof is substantially square with rounded corners. The diameter of bottom 22 is smaller than a length of a side of annular edge piece 32. The side walls thus run inward toward the bottom. Container 20 thus has a form which most resembles a truncated cone. The annular edge piece 32 is provided with a welding surface, i.e. edge piece 32 takes a sufficiently wide and smooth form on its upper side to enable a covering film (40, see Fig. 1B) to be arranged.

Packaging 20 is further provided with a first pair and a second pair of outward directed parts 33A, 33B and 34A, 34B. In this embodiment the parts 34A, 34B of the second pair are each provided with an indentation 35, whereby a finger-like section 36 is obtained. When parts 34A, 34B are folded over, finger-like sections 36 and indentations 35 can engage in each other, whereby a stable covering is obtained without an additional connecting means such as adhesive having to be applied.

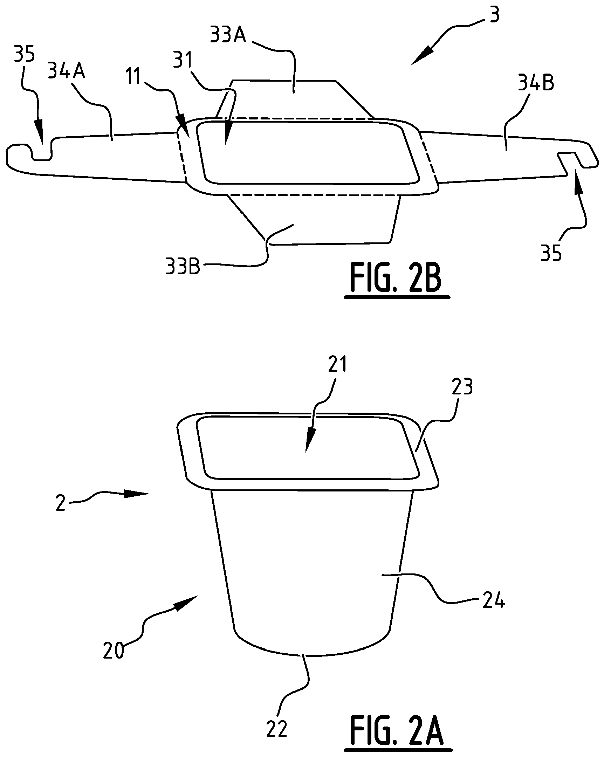

As further shown in Fig. 2A and Fig. 2B, packaging 10 is formed from two films 2, 3. In the shown embodiment films 2, 3 have been preprocessed into a first film 2 of which container 20 forms part and a second film 3 provided with the pairwise parts 33A, 33B and 34A and 34B. Where Fig. 2A and Fig. 2B show films 2, 3 in their individualized form, it must be understood that this individualization can take place after first and second films 2, 3 have been placed relative to each other. It is deemed advantageous for one of the films 2, 3 to have already been individualized, while the other film has already been divided into separate pieces, as shown in Fig. 2A, 2B. It is also possible for the films to be pre-cut, but still be attached to each other with connecting lines. These connecting lines can be simply removed later. It is also possible that films 2, 3 have been pre-cut, but that container 20 has not yet been formed. Instead, first film 1 is substantially flat. The deforming of first film 2 into container 20 then takes place in the same step as the connecting of first and second films 2, 3 with thermoforming. It is in any case preferred for recess 31 in second film 3 to have already been arranged before films 2, 3 are placed on each other.

When first film 2 is placed on second film 3, or vice versa, films 2, 3 are aligned relative to each other such that the cavity 21 in first film 2 corresponds with the recess 31 in second film 3. This ensures that flange 23 overlaps with contact areas 11 in second film 3. Contact areas 11 are designated in Fig. 2B with a dotted line. In contrast to an (in this case) annular edge piece 32 around recess 31, contact areas 11 are in the shown embodiment not distinguishable from the parts 33A, 33B, 34A, 34B. The aligning of first film 2 relative to second film 3 or vice versa is preferably implemented by modified dies of a machine. Owing to the shape of the die which is applied, a strengthened edge piece 32 is formed when first and second films 2, 3 are fused together. The shape of second film 3 is here chosen such that a connecting edge 37 protrudes outside edge piece 32. This lateral protruding of connecting edge 37 is mechanically favourable. It moreover ensures that there is some space between parts 33A, 33B, 34A, 34B and edge piece 32. This facilitates the folding over of said parts. It is deemed advantageous to arrange a folding seam between said parts 33A, 33B, 34A, 34B and connecting edge 37.

Fig. 1B shows packaging 10 in the covered state. Also visible here is a covering film 40 which is attached to upper edge 23 (not designated in Fig. 1B). In the shown embodiment the folding over of parts 33A, 33B, 34A, 34B is further advanced by the presence of further folding seams in said parts. A folding flank 38 is hereby defined, and further an upright edge 39. This upright edge 39 is particularly present on the pair of parts (33A, 33B in Fig. 1B) with the finger-like sections 36. This is because this pair of parts 33A, 33B must be positioned further upward than the other parts 34A, 34B, which come to lie substantially flat on covering film 40.

A packaging suitable for hot-filling, which has further been sufficiently strengthened to prevent crack formation and which furthermore has an eye-catching design, is in this way obtained by connecting two films by thermoforming.

A food packaging provided with a container and a covering is thus provided, wherein the container comprises a bottom and at least a side wall. An annular edge piece is situated on an upper edge of the side wall. The covering comprises a first part which is connected to the container and extends from the edge piece, wherein the first part is rotatable between an open state of the container and a covered state by folding over the first part along the connecting edge. The edge piece is provided with a welding surface to which a sealing film can be attached. After arranging of the sealing film, the first part of the covering is placed over the sealing film without further mechanical attachment to the container. The food packaging can be manufactured by combining two films by means of thermoforming. The food packaging is suitable for being hot-filled with foodstuff, such as a meal.

## Claims

1. Method for manufacturing a food packaging (10) with a container (20), which method comprises the steps of:
- Deforming a first film (2), thus forming a bottom (22), at least one side wall (24), and a flange (23) protruding outward on an upper edge of the side wall (24);
- Providing a second film (3) comprising a first zone(33A, 34A);
- Placing the second film (3) on the first film (2) or vice versa in a manner such that the first zone (33A, 34A) of the second film (3) overlaps with the flange (23) in a contact area (11);
- Connecting the first film and the second film
**characterized in that**:
- the second film (3) is provided with a recess (31) and
- the first film (2) and the second film (3) are connected by means of thermoforming,
wherein the contact area (11) and an overlapping part of the flange (23) are fused into an edge piece (32), wherein an upper side of the edge piece (32) is provided with a welding surface to which a sealing film (40) can be attached.

2. Method as claimed in claim 1, wherein the second film (3) is provided with a further zone (33B, 34B) which overlaps with the flange (23) in a second contact area (11) when the second film (3) is placed on the first film (2).

3. Method as claimed in claims 1-2, wherein the thermoforming is performed in a manner such that at least one strengthened edge piece (32) is created.

4. Method as claimed in claims 1-3, wherein the deforming of the first film (2) takes place prior to the placing of the two films (2, 3) relative to each other.

5. Method as claimed in claims 1-3, wherein the deforming of the first film (2) takes place simultaneously to the first and the second film (2, 3) being connected to each other.

6. Method as claimed in any of the foregoing claims, wherein the first and second films (2, 3) are each provided from a roll.

7. Method as claimed in claim 6, further comprising the step of deforming the flat film (2) coming from the roll, thus forming a bottom (22) and the at least one side wall (24).

8. Food packaging provided with a container (20) and a covering, wherein the container (20) comprises a bottom (22) and at least a side wall (24), which side wall (24) is provided with an upper edge, wherein
- an annular edge piece (32) is present on the upper edge of the side wall,
- the covering comprises a first part (33A, 34A) which is connected to the container (20), wherein the first part (33A, 34A) extends from the annular edge piece (32) and is rotatable between an open state of the container and a covered state by folding over the first part (33A, 34A) relative to the edge piece (32), wherein, after arranging of a sealing film (40), the first part (33A, 34A) of the covering is in the covered state placed over the sealing film (40),
**characterized in that**:
- the edge piece (32) has a greater thickness than the first part (33A, 34A) extending from the edge piece (32) and is formed by locally fusing together two films by means of thermoforming, and
- the edge piece is provided on an upper side with a welding surface to which the sealing film (40) can be attached.

9. Food packaging as claimed in claim 8, wherein the covering also comprises a second part (33B, 34B) which is connected to the container (20) and extends from the edge piece (32), wherein the second part (33B, 34B) is rotatable between an open state and a covered state and wherein the first part (33A, 34A) is free of a connection with the second part (33B, 34B) and is connected to the container (20) on an opposite side relative to the first part (33A, 34A), wherein the first and the second part (33A, 33B) can preferably be attached to each other.

10. Food packaging as claimed in claim 9, wherein the first and the second part can be attached to each other with an attaching means and have a form such that each of the parts is directed obliquely upward in the covered state.

11. Food packaging as claimed in claim 8 or 9, wherein the container has substantially the shape of a truncated cone, while the annular edge piece (32) comprises substantially four straight pieces.

12. Food packaging as claimed in any of the claims 8-11, wherein the edge piece (32) is provided with at least one laterally protruding connecting edge (37), wherein the first part is connected with the connecting edge (37) to the container and is rotatable along the connecting edge (37).

13. Food packaging as claimed in claims 8-12, obtainable with the method as claimed in claims 1-7.

14. Food packaging as claimed in claims 8-13, further provided with a covering film, preferably with foodstuff in the food packaging.

15. Method for making a packaged food product, comprising the steps of:
- Providing a food packaging as claimed in any of the foregoing claims 8-13;
- Preparing foodstuff;
- Filling the container (20) with the prepared foodstuff at an increased temperature, preferably at least 70°C;
- Adding a gas flushing;
- Hermetically sealing the food packaging by arranging a covering film (40);
- Covering the food packaging by carrying at least the first part (33A, 34A) of the covering from the open state into the covered state, and
- Cooling the filled packaging, preferably to a temperature of 2-4°C.

## Patentansprüche

1. Verfahren zum Herstellen einer Lebensmittelverpackung (10) mit einem Behälter (20), wobei das Verfahren die Schritte aufweist:
- Verformen einer ersten Folie (2), wodurch ein Boden (22), wenigstens eine Seitenwand (24) und ein Bund (23) ausgebildet wird, der an einer Oberkante der Seitenwand (24) nach außen hervorsteht;
- Vorsehen einer zweiten Folie (3), die eine erste Zone (33A, 34A) aufweist;
- Anordnen der zweiten Folie (3) auf der ersten Folie (2) oder umgekehrt in einer Weise, dass die erste Zone (33A, 34A) der zweiten Folie (3) mit dem Bund (23) in einem Kontaktbereich (11) überlappt;
- Verbinden der ersten Folie und der zweiten Folie,
**dadurch gekennzeichnet, dass**
- die zweite Folie (3) mit einer Aussparung (31) vorgesehen ist, und
- die erste Folie (2) und die zweite Folie (3) mittels Thermoformen verbunden werden, wobei der Kontaktbereich (11) und ein überlappender Teil des Bunds (23) in ein Kantenstück (32) verschweißt werden, wobei eine Oberseite des Kantenstücks (32) mit einer Verschweißfläche vorgesehen ist, an der eine Abdichtfolie (40) angebracht werden kann.

2. Verfahren nach Anspruch 1, wobei die zweite Folie (3) mit einer weiteren Zone (33B, 34B) vorgesehen ist, die mit dem Bund (23) in einem zweiten Kontaktbereich (11) überlappt, wenn die zweite Folie (3) auf der ersten Folie (2) angeordnet ist.

3. Verfahren nach einem der Ansprüche 1 bis 2, wobei das Thermoformen in einer Weise durchgeführt wird, dass wenigstens ein verstärktes Kantenstück (32) erzeugt wird.

4. Verfahren nach einem der Ansprüche 1 bis 3, wobei das Verformen der ersten Folie (2) vor dem Anordnen der beiden Folien (2, 3) in Bezug zueinander erfolgt.

5. Verfahren nach einem der Ansprüche 1 bis 3, wobei das Verformen der ersten Folie (2) gleichzeitig mit dem Verbinden der ersten und zweiten Folie (2, 3) miteinander erfolgt.

6. Verfahren nach einem der vorhergehenden Ansprüche, wobei die erste und zweite Folie (2, 3) jeweils von einer Rolle vorgesehen werden.

7. Verfahren nach Anspruch 6, das weiterhin den Schritt des Verformens der flachen Folie (2), die von der Rolle stammt, aufweist, wodurch eine Unterseite (22) und die wenigstens eine Seitenwand (24) geformt werden.

8. Lebensmittelverpackung, die mit einem Behälter (20) und einem Deckel vorgesehen ist, wobei der Behälter (20) eine Unterseite (22) und wenigstens eine Seitenwand (24) aufweist, wobei die Seitenwand (24) mit einer Oberkante vorgesehen ist, wobei
- ein ringförmiges Kantenstück (32) an der Oberkante der Seitenwand vorhanden ist, der Deckel einen ersten Teil (33A, 34A) aufweist, der mit dem Behälter (20) verbunden ist, wobei der erste Teil (33A, 34A) von dem ringförmigen Kantenstück (32) aus verläuft und zwischen einem geöffneten Zustand des Behälters und einem abgedeckten Zustand durch Falten über den ersten Teil (33A, 34A) in Bezug zum Kantenstück (32) drehbar ist, wobei nach Anordnen einer Abdichtfolie (40), der erste Teil (33A, 34A) des Deckels im abgedeckten Zustand über der Abdichtfolie (40) angeordnet ist,
**dadurch gekennzeichnet, dass**
- das Kantenstück (32) eine größere Dicke hat als der erste Teil (33A, 34A), der vom Kantenstück (32) aus verläuft und örtlich gebildet wird, indem zwei Folien mittels Thermoformen miteinander verschweißt werden, und
- das Kantenstück an einer Oberseite mit einer Schweißfläche vorgesehen ist, an der die Abdichtfolie (40) angebracht werden kann.

9. Lebensmittelverpackung nach Anspruch 8, wobei der Deckel auch einen zweiten Teil (33B, 34B) aufweist, der mit dem Behälter (20) verbunden ist und von dem Kantenstück (32) aus verläuft, wobei der zweite Teil (33B, 34B) zwischen einem geöffneten Zustand und einem abgedeckten Zustand drehbar ist, und wobei der erste Teil (33A, 34A) frei von einer Verbindung zu dem zweiten Teil (33B, 34B) ist und mit dem Behälter (20) an einer gegenüberliegenden Seite in Bezug zum ersten Teil (33A, 34A) verbunden ist, wobei der erste und der zweite Teil (33A, 33B) vorzugsweise aneinander angebracht sein können.

10. Lebensmittelverpackung nach Anspruch 9, wobei der erste und der zweite Teil durch ein Befestigungsmittel aneinander befestigt worden sind und eine Form dergestalt haben, dass ein jeder der Teile im abgedeckten Zustand schräg nach oben ausgerichtet ist.

11. Lebensmittelverpackung nach Anspruch 8 oder 9, wobei der Behälter im Wesentlichen die Form eines abgeschnittenen Konus hat, während das ringförmige Kantenstück (32) im Wesentliche vier gerade Teile aufweist.

12. Lebensmittelverpackung nach einem der Ansprüche 8 bis 11, wobei das Kantenstück (32) mit wenigstens einer seitlich hervorstehenden Verbindungkante (37) vorgesehen ist, wobei der erste Teil über die Verbindungskante (37) mit dem Behälter verbunden ist und entlang der Verbindungskante (37) drehbar ist.

13. Lebensmittelverpackung nach einem der Ansprüche 8 bis 12, die mit einem Verfahren nach einem der Ansprüche 1 bis 7 erhaltbar ist.

14. Lebensmittelverpackung nach einem der Ansprüche 8 bis 13, die weiterhin mit einer Abdeckfolie vorgesehen ist, vorzugsweise mit Nahrungsmitteln in der Lebensmittelverpackung.

15. Verfahren zum Herstellen eines verpackten Lebensmittelprodukts, das die Schritte aufweist:
- Vorsehen einer Lebensmittelverpackung nach einem der obigen Ansprüche 8 bis 13;
- Zubereiten des Nahrungsmittels;
- Füllen des Behälters (20) mit dem zubereiteten Nahrungsmittel bei einer erhöhten Temperatur, vorzugsweise mindestens 70 °C;
- Hinzufügen einer Gasspülung;
- Hermetisches Abdichten der Lebensmittelverpackung durch Anordnen einer Abdeckfolie (40);
- Abdecken der Lebensmittelverpackung durch Überführen von wenigstens dem ersten Teil (33A, 34A) des Deckels vom geöffneten Zustand in den abgedeckten Zustand, und
- Kühlen der gefüllten Verpackung, vorzugsweise auf eine Temperatur von 2 bis 4 °C.

## Revendications

1. Procédé pour fabriquer un emballage alimentaire (10) avec un contenant (20), lequel procédé comprend les étapes de :
- déformation d'un premier film (2), formant ainsi un fond (22), au moins une paroi latérale (24), et un rebord (23) faisant saillie vers l'extérieur sur un bord supérieur de la paroi latérale (24) ;
- fourniture d'un deuxième film (3) comprenant une première zone (33A, 34A) ;
- placement du deuxième film (3) sur le premier film (2) ou vice versa de sorte que la première zone (33A, 34A) du deuxième film (3) chevauche le rebord (23) dans une zone de contact (11);
- liaison du premier film et du deuxième film
**caractérisé en ce que** :
- le deuxième film (3) est doté d'un évidement (31) et
- le premier film (2) et le deuxième film (3) sont liés au moyen d'un thermoformage,
dans lequel la zone de contact (11) et une partie chevauchante du rebord (23) sont fusionnées en un élément de bord (32), dans lequel un côté supérieur de l'élément de bord (32) est doté d'une surface de soudage à laquelle un film d'étanchéité (40) peut être fixé.

2. Procédé selon la revendication 1, dans lequel le deuxième film (3) est doté d'une autre zone (33B, 34B) qui chevauche le rebord (23) dans une deuxième zone de contact (11) lorsque le deuxième film (3) est placé sur le premier film (2).

3. Procédé selon les revendications 1 et 2, dans lequel le thermoformage est mis en oeuvre de sorte qu'au moins un élément de bord renforcé (32) soit créé.

4. Procédé selon les revendications 1 à 3, dans lequel la déformation du premier film (2) se produit avant le placement des deux films (2, 3) l'un par rapport à l'autre.

5. Procédé selon les revendications 1 à 3, dans lequel la déformation du premier film (2) se produit simultanément à la liaison des premier et deuxième films (2, 3) l'un à l'autre.

6. Procédé selon l'une quelconque des revendications précédentes, dans lequel les premier et deuxième films (2, 3) sont fournis chacun depuis un rouleau.

7. Procédé selon la revendication 6, comprenant en outre l'étape de déformation du film plat (2) provenant du rouleau, formant ainsi un fond (22) et l'au moins une paroi latérale (24).

8. Emballage alimentaire doté d'un contenant (20) et d'un revêtement, dans lequel le contenant (20) comprend un fond (22) et au moins une paroi latérale (24), laquelle paroi latérale (24) est dotée d'un bord supérieur, dans lequel
- un élément de bord annulaire (32) est présent sur le bord supérieur de la paroi latérale,
- le revêtement comprend une première partie (33A, 34A) qui est liée au contenant (20), dans lequel la première partie (33A, 34A) s'étend depuis l'élément de bord annulaire (32) et peut pivoter entre un état ouvert du contenant et un état recouvert en repliant la première partie (33A, 34A) par rapport à l'élément de bord (32), dans lequel, après l'agencement d'un film d'étanchéité (40), la première partie (33A, 34A) du revêtement est dans l'état recouvert placée sur le film d'étanchéité (40),
**caractérisé en ce que** :
- l'élément de bord (32) a une épaisseur plus importante que la première partie (33A, 34A) s'étendant depuis l'élément de bord (32) et est formé par fusion locale des deux films au moyen du thermoformage, et
- l'élément de bord est fourni sur un côté supérieur avec une surface de soudage à laquelle le film d'étanchéité (40) peut être fixé.

9. Emballage alimentaire selon la revendication 8, dans lequel le revêtement comprend également une deuxième partie (33B, 34B) qui est liée au contenant (20) et s'étend depuis l'élément de bord (32), dans lequel la deuxième partie (33B, 34B) peut pivoter entre un état ouvert et un état recouvert et dans lequel la première partie (33A, 34A) est dépourvue de liaison à la deuxième partie (33B, 34B) et est liée au contenant (20) sur un côté opposé par rapport à la première partie (33A, 34A), dans lequel les première et deuxième parties (33A, 33B) peuvent de préférence être fixées l'une à l'autre.

10. Emballage alimentaire selon la revendication 9, dans lequel les première et deuxième parties peuvent être fixées l'une à l'autre avec un moyen de fixation et ont une forme telle que chacune des parties est orientée de manière oblique vers le haut dans l'état recouvert.

11. Emballage alimentaire selon la revendication 8 ou 9, dans lequel le contenant a sensiblement la forme d'un cône tronqué, en même temps que l'élément de bord annulaire (32) comprend sensiblement quatre éléments droits.

12. Emballage alimentaire selon l'une quelconque des revendications 8 à 11, dans lequel l'élément de bord (32) est doté d'au moins un bord de liaison faisant saillie latéralement (37), dans lequel la première partie est liée avec le bord de liaison (37) au contenant et peut pivoter le long du bord de liaison (37).

13. Emballage alimentaire selon les revendications 8 à 12, pouvant être obtenu avec le procédé selon les revendications 1 à 7.

14. Emballage alimentaire selon les revendications 8 à 13, en outre doté d'un film de revêtement, de préférence avec des denrées alimentaires dans l'emballage alimentaire.

15. Procédé pour réaliser un produit alimentaire emballé, comprenant les étapes de :
- fourniture d'un emballage alimentaire selon l'une quelconque des revendications 8 à 13 précédentes ;
- préparation d'une denrée alimentaire ;
- remplissage du contenant (20) avec la denrée alimentaire préparée à une température élevée, de préférence d'au moins 70 °C ;
- ajout d'un gaz de rinçage ;
- fermeture hermétique de l'emballage alimentaire en agençant un film de revêtement (40) ;
- revêtement de l'emballage alimentaire en amenant au moins la première partie (33A, 34A) du revêtement de l'état ouvert à l'état recouvert, et
- refroidissement de l'emballage rempli, de préférence à une température de 2 à 4 °C.
